# EUROPÄISCHE PATENTSCHRIFT

(11) **EP 0 927 922 B1**
(45) Veröffentlichungstag und Bekanntmachung des Hinweises auf die Patenterteilung: **09.04.2003**
(21) Anmeldenummer: 98123465.1
(22) Anmeldetag: 11.12.1998
(51) Int. Cl.: G06F 1/16

(54) **Aus einem Computer und integrierter Telekommunikationseinrichtung bestehendes Gerät**
Apparatus comprising a computer and an integrated telecommunication device
Appareil comprenant un ordinateur et un dispositif de télécommunication intégré

(30) Priorität: 05.01.1998 GB 9800120
(43) Veröffentlichungstag der Anmeldung: 07.07.1999
(73) Patentinhaber: SIEMENS AKTIENGESELLSCHAFT, 80333 München (DE)
(72) Erfinder: Riddiford, Martin, London SE21 7DF (GB); Witts, Martin, Abbots, Berkshire RG7 4EE (GB)

(56) Entgegenhaltungen:
- DE-U- 29 610 265
- GB-A- 2 228 357
- US-A- 4 839 837
- US-A- 5 168 426
- US-A- 5 345 362
- US-A- 5 668 570
- PATENT ABSTRACTS OF JAPAN vol. 017, no. 363 (P-1570), 8. Juli 1993 & JP 05 053685 A (MATSUSHITA ELECTRIC IND CO LTD), 5. März 1993 & JP 05 053685 A (MATSUSHITA ELECTRIC IND CO)

## Beschreibung

Die vorliegende Erfindung betrifft ein aus einem Computer und integrierter Telekommunikationseinrichtung bestehendes Gerät, das aus einer Systemeinheit, einer Tastatureinheit und einer Anzeigeeinheit gebildet ist, die um eine gemeinsame Achse schwenkbar gelagert sind, wobei die jeweils außenliegende Tastatureinheit und die Systemeinheit im zusammengeklappten und in einem um 180° aufgeklappten Zustand arretiert sind.

Ein solches Gerät ist aus DE 296 10 265 bekannt.

Durch einen derartigen Aufbau braucht das Gerät zur Eingabe von Daten oder zur Beschriftung der Anzeigeeinheit mittels eines Eingabestiftes nur um 180° aufgeklappt zu werden und bildet z. B. bei mobilem Gebrauch des Gerätes aufgrund der Arretierung von Systemeinheit und Tastatureinheit eine stabile Unterlage für die Anzeigeeinheit, die in diesem Fall auf der Systemeinheit aufliegt.

Aufgabe der vorliegenden Erfindung ist es, die schwenkbare Anzeigeeinheit so zu haltern, daß bei aufgeklapptem Gerät stets deren sichere Bedienung möglich ist.

Diese Aufgabe wird dadurch gelöst, daß die innenliegende Anzeigeeinheit in bezug auf die Systemeinheit in Positionen von 0 bis 90° arretierbar ist.

Bei Auflage des aufgeklappten Gerätes auf einer festen Unterlage, z. B. einem Tisch, kann die Anzeigeeinheit in die vom Benutzer gewünschte Schrägstellung gebracht und in dieser Stellung arretiert werden. Durch die arretierte Position von System- und Tastatureinheit sowie die fixierte Schrägstellung der Anzeigeeinheit ist gewährleistet, daß das Gerät bei Bedienung mittels eines Eingabestiftes, d. h. bei mechanischem Druck auf die Anzeigefläche, nicht umkippt. Dabei kann die Arretierung der Anzeigeeinheit stufenlos erfolgen, d. h. in jeder gewünschten bzw. eingestellten Lage kann mechanisch Druck auf die Anzeigeeinheit ausgeübt werden, ohne daß ein Abkippen befürchtet werden muß.

Es besteht auch die Möglichkeit, die Arretierung in Rasterstufen vorzunehmen, so daß gröbere Abstufungen erreicht werden können. Hierbei bietet es sich aus platzsparenden Gründen an, die Elemente zur Arretierung der Anzeigeeinheit in der allen drei Einheiten gemeinsamen Achse anzuordnen.

Eine weitere Möglichkeit ergibt sich dadurch, daß an der System- oder Anzeigeeinheit ein schwenkbarer Bügel angeordnet ist, der in an der Anzeige- oder Systemeinheit vorgesehene Rastelemente eingreift. Diese Rastelemente können beispielsweise sägezahnförmig in einer Reihe hintereinander liegend angeordnet werden, so daß der z. B. im Bereich der Rastelemente angeordnete U-förmig gestaltete Bügel leicht von Hand versetzt oder gelöst werden kann. Dabei können die Rastelemente und der Bügel sowohl mittig oder seitlich an der System- oder Anzeigeeinheit angeordnet sein.

Eine weitere Arretierungsmöglichkeit kann darin gesehen werden, daß zwischen der Anzeigeeinheit und der Systemeinheit eine Stütze vorgesehen ist, die aus mehreren Stützelementen besteht, die untereinander und mit der Systemeinheit und der Anzeigeeinheit über Gelenke verbunden sind. Hierbei können der Anzahl der einzelnen Stützelemente entsprechend mehrere Positionen der Anzeigeeinheit zur Systemeinheit eingenommen werden. Im gänzlich ausgezogenen Zustand der Stützelemente sind die einzelnen Gelenke zwischen den Stützelementen so konstruiert, daß sie über einen Klappunkt hinaus in eine stabile Lage geführt werden.

Gemäß einer weiteren Ausgestaltung der Erfindung kann auf der Innenfläche der Systemeinheit eine Ausnehmung zur Aufnahme - der zusammengefalteten Stützelemente vorgesehen sein.

Die Erfindung soll im folgenden anhand eines Ausführungsbeispiels näher erläutert werden.

Es zeigt
Figur 1 das aus einer Systemeinheit, Tastatureinheit und einer Anzeigeeinheit bestehende tragbare Gerät,
Figur 2 die Anzeigeeinheit in einer ersten aufgeklappten Position,
Figur 3 die Anzeigeeinheit in einer zweiten aufgeklappten Position.

Das aus einem Computer mit integrierter Telekommunikationseinrichtung bestehende Gerät 1 wird durch die Systemeinheit 2, die Tastatureinheit 3 und die Anzeigeeinheit 4 gebildet. Alle drei Einheiten sind um eine ihnen gemeinsame Achse schwenkbar gelagert. Die außenliegende Tastatureinheit 3 kann vom zusammengeklappten Zustand in bezug auf die außenliegende Systemeinheit 2 um 180° aufgeklappt werden, wobei jeweils in der zusammengeklappten und um 180° geöffneten Position diese beiden Geräteteile zueinander arretiert sind.

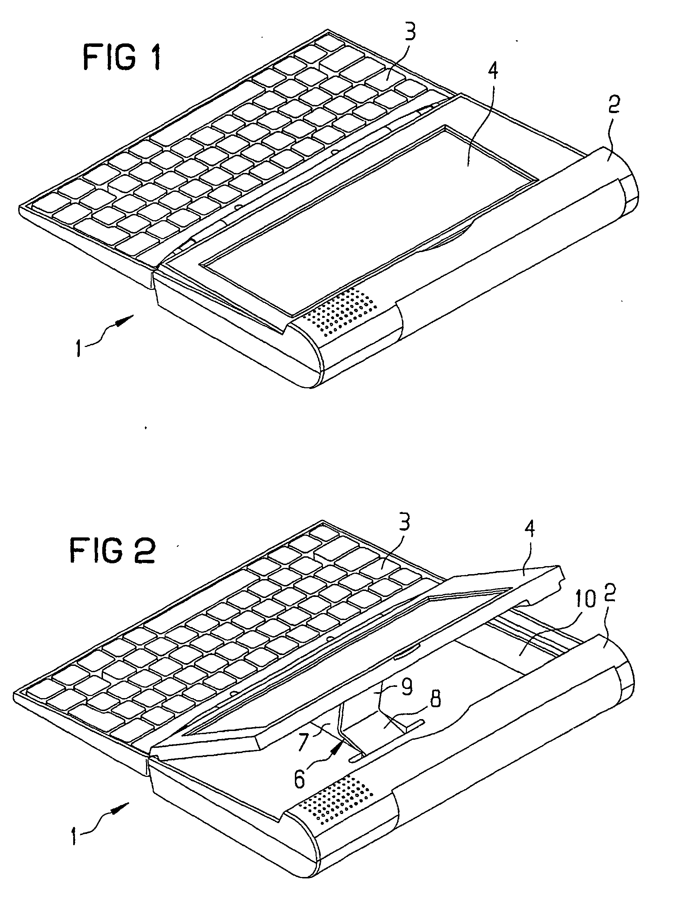

Die ein beschreibbares LCD-Display aufweisende Anzeigeeinheit 4 kann von einer Ruheposition (Figur 1), bei der sich die Anzeigeeinheit 4 in einer Aufnahme 10 auf der Innenfläche der Systemeinheit 2 befindet, zum Zweck der Beschriftung bis ca. 90° verschwenkt und in einigen Stellungen arretiert werden.

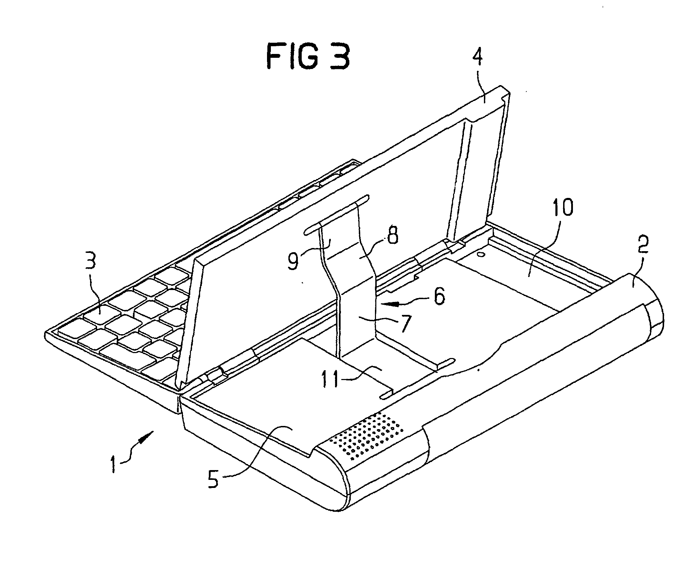

Zu diesem Zweck ist, wie aus den Figuren 2 und 3 ersehen werden kann, zwischen der Anzeigeeinheit 4 und der Innenfläche 5 der Systemeinheit 2 eine in mehrere Positionen faltbare Stütze 6 vorgesehen. Diese Stütze 6 setzt sich aus den bandförmigen Stützelementen 7, 8 und 9 zusammen, wobei jeweils der - freie Endbereich der Stützelemente 7 an der Innenfläche 5 der Systemeinheit 2 und der freie Endbereich des Stützelementes 9 an der Anzeigeeinheit 4 angelenkt sind, während die einzelnen Stützelemente 7, 8 und 9 untereinander ebenfalls über Gelenke verbunden sind.

In der in Figur 1 gezeigten Position ruht die Anzeigeeinheit in der Aufnahme 10 (Figur 2) der Systemeinheit 2. In dieser Position sind die einzelnen Stützelemente 7, 8 und 9 zusammengefaltet und liegen teilweise in der nutförmien Ausnehmung 11 übereinander.

In der in Figur 2 dargestellten Position ist die Anzeigeeinheit 4 in bezug auf die Systemeinheit 2 unter einem spitzen Winkel verschwenkt und arretiert. Die Stützelemente 7 und 8 liegen zusammengefaltet in der Ausnehmung 11, während sich die Anzeigeeinheit 4 auf dem Stützelement 9 abstützt und in dieser Lage fixiert ist.

In der Position nach Figur 3 nimmt die Anzeigeeinheit 4 in bezug auf die Systemeinheit 2 nahezu einen rechten Winkel ein. Hierbei sind alle drei Stützelemente 7, 8 und 9 der Stütze 6 nahezu soweit gestreckt worden, daß sie sich in einer Ebene befinden. Dabei sind die einzelnen Gelenke so aufgebaut, daß ein Zusammenfalten nur in einer Richtung möglich ist, während die andere Faltrichtung durch die Konstruktion der Gelenke gesperrt ist. Somit wird auch in der in Figur 3 dargestellten Position die Anzeigeeinheit in einer arretierten Lage gehalten.

Da aufgrund der in einer um 180° aufgeklappten Position befindlichen und arretierten Systemeinheit 2 und Tastatureinheit 3 eine stabile Unterlage für die Anzeigeeinheit 4 geschaffen worden ist, kann die Anzeigeeinheit 4 bei ihrer Bedienung, z. B. Beschriftung durch einen hier nicht dargestellten Eingabestift nicht umkippen.

## Patentansprüche

1. Aus einem Computer und integrierter Telekommunikationseinrichtung bestehendes Gerät (1), das aus einer Systemeinheit (2), einer Tastatureinheit (3) und einer Anzeigeeinheit (4) gebildet ist, die um eine gemeinsame Achse schwenkbar gelagert sind, wobei die jeweils außenliegende Tastatureinheit (3) und die Systemeinheit (2) im zusammengeklappten und in einem um 180° aufgeklappten Zustand arretiert sind, **dadurch gekennzeichnet, daß** die innenliegende Anzeigeeinheit (4) in bezug auf die Systemeinheit (2) in Positionen von 0 bis 90° arretierbar ist.

2. Gerät nach Anspruch 1, **dadurch gekennzeichnet, daß** die Arretierung stufenlos erfolgt.

3. Gerät nach Anspruch 1, **dadurch gekennzeichnet, daß** die Arretierung in Rasterstufen vorgenommen wird.

4. Gerät nach Anspruch 1 bis 3, **dadurch gekennzeichnet, daß** im Bereich der Schwenkachse Elemente zur Arretierung der Anzeigeeinheit (4) angeordnet sind.

5. Gerät nach Anspruch 1 und 3, **dadurch gekennzeichnet, daß** an der System- oder Anzeigeeinheit (2, 4) ein schwenkbarer Bügel angeordnet ist, der in an der Anzeigeoder Systemeinheit (4, 2) vorgesehene Rastelemente eingreift.

6. Gerät nach Anspruch 5, **dadurch gekennzeichnet, daß** der Bügel und die Rastelemente mittig oder seitlich an der System- oder Anzeigeeinheit (2, 4) angeordnet sind.

7. Gerät nach Anspruch 1 und 3, **dadurch gekennzeichnet, daß** zwischen der Anzeigeeinheit (4) und der Systemeinheit (2) eine Stütze (6) vorgesehen ist, die aus mehreren Stützelementen (7, 8, 9) besteht, die untereinander und mitder Systemeinheit (2) und der Anzeigeeinheit (4) über Gelenke verbunden sind.

8. Gerät nach Anspruch 7, **dadurch gekennzeichnet, daß** auf der Innenfläche (5) der Systemeinheit (2) eine Ausnehmung (11) zur Aufnahme der zusammengefalteten Stützelemente (7, 8, 9) vorgesehen ist.

## Claims

1. Appliance (1) which comprises a computer and an integrated telecommunications device and is formed from a system unit (2), a keyboard unit (3) and a display unit (4) which are pivotably mounted about a common axis, where the respectively external keyboard unit (3) and the system unit (2) are locked in the closed state and in a state opened through 180°, **characterized in that** the internal display unit (4) can be locked in positions from 0 to 90° with respect to the system unit (2).

2. Appliance according to Claim 1, **characterized in that** locking is effected continuously.

3. Appliance according to Claim 1, **characterized in that** locking is performed in grid steps.

4. Appliance according to Claim 1 to 3, **characterized in that** elements for locking the display unit (4) are arranged in the region of the pivot axis.

5. Appliance according to Claim 1 and 3, **characterized in that** the system or display unit (2, 4) has a pivotable bail arranged on it which engages in latch elements provided on the display or system unit (4, 2).

6. Appliance according to Claim 5, **characterized in that** the bail and the latch elements are arranged centrally or at the side on the system or display unit (2, 4).

7. Appliance according to Claim 1 and 3, **characterized in that** a support (6) is provided between the display unit (4) and the system unit (2), said support comprising a plurality of support elements (7, 8, 9) which are connected to one another and to the system unit (2) and to the display unit (4) by means of articulations.

8. Appliance according to Claim 7, **characterized in that** a recess (11) for holding the folded support elements (7, 8, 9) is provided on the inner face (5) of the system unit (2).

## Revendications

1. Appareil (1) comprenant un ordinateur et un dispositif de télécommunication intégré, composé d'une unité système (2), d'une unité clavier (3) ainsi que d'une unité d'affichage (4), qui sont placées de manière pivotante autour d'un axe commun, l'unité clavier (3) extérieure et l'unité système (2) étant bloquées en position fermée et en position ouverte à 180°, **caractérisé en ce que** l'unité d'affichage (4) intérieure peut être bloquée dans des positions de 0 à 90° par rapport à l'unité système (2).

2. Appareil selon la revendication 1, **caractérisé en ce que** le blocage a lieu sans gradation.

3. Appareil selon la revendication 1, **caractérisé en ce que** le blocage est réalisé par des paliers d'encliquetage.

4. Appareil selon l'une quelconque des revendications 1 à 3, **caractérisé en ce que** des éléments sont disposés dans la zone de l'axe de pivotement pour bloquer l'unité d'affichage (4).

5. Appareil selon les revendications 1 et 3, **caractérisé en ce qu'**un étrier pivotant est disposé sur l'unité système ou d'affichage (2, 4), lequel étrier s'engage dans les éléments d'encliquetage prévus sur l'unité d'affichage ou système (4, 2).

6. Appareil selon la revendication 5, **caractérisé en ce que** l'étrier et les éléments d'encliquetage sont disposés au milieu ou latéralement sur l'unité système ou d'affichage (2,4).

7. Appareil selon les revendications 1 et 3, **caractérisé en ce qu'**un support (6) est disposé entre l'unité d'affichage (4) et l'unité système (2), lequel support est constitué de plusieurs éléments de support (7, 8, 9) reliés entre eux et à l'unité système (2) ainsi qu'à l'unité d'affichage (4) au moyen de charnières.

8. Appareil selon la revendication 7, **caractérisé en ce qu'**un évidement (11) pour le logement des éléments de support (7, 8, 9) repliés est prévu sur la surface intérieure (5) de l'unité système (2).
